# EUROPÄISCHE PATENTSCHRIFT

(11) **EP 3 717 287 B1**
(45) Veröffentlichungstag und Bekanntmachung des Hinweises auf die Patenterteilung: **04.08.2021**
(21) Anmeldenummer: 18803582.8
(22) Anmeldetag: 06.11.2018
(51) Int. Cl.: B60G 11/44, B60G 21/055, B60G 11/18, B60G 11/20

(54) **DREHFEDERANORDNUNG FÜR EINE RADAUFHÄNGUNG EINES KRAFTFAHRZEUGS SOWIE RADAUFHÄNGUNG FÜR EIN RAD EINER ACHSE EINES KRAFTFAHRZEUGS**
TORSION SPRING ARRANGEMENT FOR A WHEEL SUSPENSION ARRANGEMENT OF A MOTOR VEHICLE, AND WHEEL SUSPENSION ARRANGEMENT FOR A WHEEL OF AN AXLE OF A MOTOR VEHICLE
ENSEMBLE RESSORT DE TORSION POUR UNE SUSPENSION DE ROUE D'UN VÉHICULE À MOTEUR ET SUSPENSION DE ROUE POUR UNE ROUE D'UN ESSIEU D'UN VÉHICULE À MOTEUR

(30) Priorität: 30.11.2017 DE 102017221588
(43) Veröffentlichungstag der Anmeldung: 07.10.2020
(73) Patentinhaber: Audi AG, 85045 Ingolstadt (DE)
(72) Erfinder: SCHINDLER, Sebastian, 85049 Ingolstadt (DE); ENGEL, Mike, 09487 Schlettau (DE)
(86) Internationale Anmeldenummer: PCT/EP2018/080362
(87) Internationale Veröffentlichungsnummer: WO 2019/105691

(56) Entgegenhaltungen:
- EP-A1- 0 197 850
- DE-A1-102007 012 203
- DE-A1-102008 028 352
- DE-A1-102010 033 002
- DE-A1-102016 217 698

## Beschreibung

Die Erfindung betrifft eine Drehfederanordnung für eine Radaufhängung eines Kraftfahrzeugs gemäß der im Oberbegriff des Patentanspruches 1 angegebenen Art sowie eine Radaufhängung für ein Rad einer Achse eines Kraftfahrzeugs gemäß der im Oberbegriff des Patentanspruches 9 angegebenen Art.

Eine gattungsgemäße Drehfederanordnung mit zwei koaxial ineinander angeordneten Torsionsstäben sowie einem parallel zu den beiden Torsionsstaben angeordnetes, d.h. in axialer Richtung (a) der Torsionsstäbe ausgerichtetes, Federelement, welches mit den Torsionsstäben in Wirkverbindung steht und damit in Bezug auf die Federwirkung in Reihe zu den Torsionsstäben wirkt, ist in der nachveröffentlichten DE 10 2016 217 698 offenbart. Die offenbarte Drehfederanordnung zeichnet sich dadurch aus, dass dem Federelement eine erste Stelleinheit zur Verlagerung eines Federfußpunktes und/oder eine zweite Stelleinheit zur Einstellung einer Tragfederkonstante zugeordnet ist. Gemäß der Offenbarung der DE 10 2016 217 698 wird das Federelement im Wesentlichen mit einer rotatorischen Bewegung beaufschlagt, d.h. das Federelement wird im Wesentlichen auf Torsion belastet.

Der Erfindung liegt die Aufgabe zu Grunde eine Drehfederanordnung für eine Radaufhängung eines Kraftfahrzeugs gemäß der im Oberbegriff des Patentanspruches 1 angegebenen Art derart weiterzubilden, dass eine kosten- und komplexitätsreduzierte Konstruktion ermöglicht ist.

Diese Aufgabe wird durch die kennzeichnenden Merkmale des Patentanspruches 1 in Verbindung mit seinen Oberbegriffsmerkmalen gelöst.

Die Unteransprüche 2 bis 8 bilden vorteilhafte Weiterbildungen der erfindungsgemäßen Drehfederanordnung.

In bekannter Art und Weise umfasst die Drehfederanordnung für eine Radaufhängung eines Kraftfahrzeugs zwei koaxial ineinander angeordnete Torsionsstäbe sowie ein zusätzliches Federelement, das in axialer Richtung a der Torsionsstäbe ausgerichtet und achsparallel mit Radialabstand zu den beiden koaxialen Torsionsstäben angeordnet ist, und das über eine Lagerstelle am Kraftfahrzeugaufbau lagerbar ist. Dabei ist der radial äußere, hohlzylindrische Torsionsstab, welcher über ein Lager fest am Kraftfahrzeugaufbau lagerbar ist, mit einem an einem Radführungselement befestigbaren Abtriebshebel drehfest verbunden, und der radial innere Torsionsstab ist bereichsweise drehfest mit dem äußeren Torsionsstab und über eine Koppel drehfest mit dem Federelement verbunden, so dass das Federelement in Bezug auf die Federwirkung in Reihe zu den Torsionsstäben wirkt.

Erfindungsgemäß ist dabei vorgesehen, dass das Federelement über ein Federelementlager an der Koppel gelagert ist, welches derart ausgebildet ist, dass das Federelement ausschließlich mit einer in tangentialer Richtung, d.h. senkrecht zur radialen Richtung r und senkrecht zur axialen Richtung a, gerichteten translatorischen Auslenkung beaufschlagt wird und dass die das Federelement kraftfahrzeugaufbauseitig lagernde Lagerstelle als ein Festlager ausgebildet ist.

Das zwischen Federelement und Koppel angeordnete Federelementlager, welches aufgrund seiner Ausbildung eine aus einer Verdrehung des inneren Torsionsstabs resultierende rotatorische Bewegung der Koppel in eine am Federelement angreifende, tangential gerichtete, translatorische Bewegung überführt, hat den Effekt, dass das Federelement ausschließlich auf Biegung und nicht - wie im Stand der Technik gemäß der DE 10 2016 217 698 - im Wesentlichen auf Torsion beansprucht wird.

Die erfindungsgemäße Ausgestaltung hat den Vorteil, dass aufgrund der ausschließlichen translatorischen Auslenkung des Federelements, nunmehr das Federelement als eine reine Biegefeder ausgeführt werden kann, mit dem Vorteil, dass ein einfacherer und damit komplexitätsreduzierter Aufbau der Drehfederanordnung und damit auch eine kostengünstigere Konstruktion der Drehfederanordnung ermöglicht ist.

Vorzugsweise ist das Federelement in Form einer Blattfeder ausgebildet. Neben geringen Kosten hat die Ausbildung des Federelements als Blattfeder noch den weiteren Vorteil, dass das die Blattfeder kraftfahrzeugaufbauseitig lagernde Festlager konstruktiv besonders einfach und kostengünstig, beispielsweise in Form einer Einspannung, zu realisieren ist.

Die Blattfeder kann aus einem metallischen Werkstoff oder einem Faserverbundwerkstoff ausgebildet sein.

In einer bevorzugten technischen Umsetzung umfasst das Federelementlager ein auslenkbares, d.h. verschiebbares Lagerelement, welches über eine kraftfahrzeugseitig fest gelagerte Führung in tangentialer Richtung translatorisch geführt ist, ein mit der Koppel und mit dem Lagerelement verbundenes erstes Lagerteil, ein mit dem Federelement und dem Lagerelement verbundenes zweites Lagerteil sowie Mittel, die die rotatorische Koppelbewegung, d.h. eine aus einer Verdrehung des zweiten Torsionsstabs resultierende rotatorische Bewegung der Koppel, in eine translatorische Bewegung des Lagerelements und damit des zweiten Lagerteils, überführt.

Gemäß einer ersten Ausführungsform des Federelementlagers sind dabei die Mittel zur Überführung der rotatorischen Koppelbewegung in eine translatorische Bewegung in Form einer schwenkbeweglichen Lagerung der Koppel an dem Lagerelement ausgebildet. Vorzugsweise ist hierzu die Koppel um eine parallel zu den Torsionsstäben ausgerichteten ersten Schwenkachse S₁, welche in Bezug zur Führung und damit zur translatorischen Verschieberichtung betrachtet senkrecht ausgerichtet ist, schwenkbar am ersten Lagerteil gelagert und das erste Lagerteil ist um eine parallel zur ersten Schwenkachse S₁ liegenden zweiten Schwenkachse S₂ schwenkbar am Lagerelement gelagert.

Eine alternative zweite Ausführungsform des koppelseitigen Lagers sieht vor, dass die Mittel zur Überführung der rotatorischen Koppelbewegung in eine translatorische Bewegung in Form eines zwischen der Führung und dem ersten und/oder dem zweiten Lagerteil angeordneten Gummi-Metall-Lagers ausgebildet sind. Vorteilhaft an dieser Ausführungsform ist, dass aufgrund der Verwendung von Gummi-Metall-Lagern eine kostengünstige Konstruktion gewährleistet ist und dass zudem aufgrund des bzw. der Gummi-Metall-Lager(s) zusätzlich eine akustische Entkopplung sichergestellt ist.

Vorzugsweise ist dabei das Federelement um eine senkrecht zu den Torsionsstäben und senkrecht zur Führung ausgerichteten dritten Schwenkachse S₃ schwenkbar am zweiten Lagerteil gelagert. Dies hat den Vorteil, dass eine verspannungsfreie Verstellung gewährleistet ist.

Der Vollständigkeit halber wird noch darauf hingewiesen, dass die bereichsweise drehfeste Verbindung des inneren Torsionsstabs mit dem äußeren Torsionsstab vorzugsweise an dem der Koppel gegenüberliegenden Endbereich des inneren Torsionsstabs ausgebildet ist und z.B. in Form einer formschlüssigen Verbindung, insbesondere in Form einer Verzahnung, oder in Form einer stoffschlüssigen Verbindung ausgebildet sind. Zudem wird noch darauf hingewiesen, dass die kraftfahrzeugseitige feste Lagerung des äußeren Torsionsstabs sowie das das Federelement kraftfahrzeugaufbauseitig lagernde Festlager sowohl unmittelbar, d.h. Torsionsstab bzw. Federelement sind über ein Lager direkt an einem Karosseriebauteil gelagert, als auch mittelbar erfolgen, d.h. das den Torsionsstab bzw. das Federelement lagernde Lager ist an einem weiteren Bauteil, welches seinerseits karosseriefest gelagert ist, befestigt.

Der Erfindung liegt des Weiteren die Aufgabe zu Grunde eine Radaufhängung für ein Rad einer Achse eines Kraftfahrzeugs gemäß der im Oberbegriff des Patentanspruches 9 angegebenen Art derart weiterzubilden, dass eine kosten- und bauraumsparende Konstruktion ermöglicht ist.

Diese Aufgabe wird durch die kennzeichnenden Merkmale des Patentanspruches 9 in Verbindung mit seinen Oberbegriffsmerkmalen gelöst.

Die Unteransprüche 10 und 11 bilden vorteilhafte Weiterbildungen der erfindungsgemäßen Drehfederanordnung.

Die erfindungsgemäße Radaufhängung für ein Rad einer Achse eines Kraftfahrzeugs zeichnet sich dadurch aus, dass eine zwischen dem Kraftfahrzeugaufbau und einem Radführungselement wirkende Tragfeder in Form einer Drehfederanordnung nach einem der Ansprüche 1 bis 8 ausgebildet ist. Aufgrund der Ausbildung der Tragfeder in Form der erfindungsgemäßen Drehfederanordnung ist in vorteilhafter Weise eine in Fahrzeughochrichtung betrachtet kompakte und damit wenig Bauraum benötigende Konstruktion ermöglicht, die zudem aufgrund der nunmehr ermöglichten Ausbildung des Federelements als eine Biegefeder im Vergleich zum Stand der Technik gemäß der DE 10 2016 217 698 weniger komplex und damit kostengünstiger ist.

Gemäß einer besonders vorteilhaften Ausführungsform der erfindungsgemäßen Radaufhängung umfasst diese ferner einen in Fahrzeugquerrichtung ausgerichteten, in Form eines hohlzylindrischen Drehfederstabs ausgebildeten Stabilisator, wobei die Drehfederanordnung bereichsweise koaxial im Innern des hohlzylindrischen Drehfederstabs angeordnet ist. D.h., der Drehfederstab des Stablisators und die beiden Torsionsstäbe der Drehfederanordnung sind in Fahrzeugquerrichtung ausgerichtet und weisen eine gemeinsame Drehachse R auf. Aufgrund der koaxial verschachtelten Anordnung ist in vorteilhafter Weise eine besonders bauraumsparende Anordnung der Tragfeder ermöglicht.

Eine weitere vorteilhafte Ausführungsform der erfindungsgemäßen Radaufhängung sieht vor, dass im Bereich der koaxialen Verschachtelung von Stabilisator und Tragfeder, d.h. im Bereich der koaxialen verschachtelten Anordnung der Bauteile Drehfederstab und Drehfederanordnung, ein kraftfahrzeugaufbauseitig fest gelagertes Gehäuse vorgesehen ist, von welchem die Bauteile in diesem Bereich umschlossen sind. Am kraftfahrzeugaufbauseitig fest gelagerten Gehäuse sind sowohl das den Drehfederstab des Stabilisators lagernde Stabilisatorlager, das den äußeren Torsionsstab der Drehfederanordnung lagernde Lager als auch das das Federelement lagernde Festlager gelagert. D.h. über das kraftfahrzeugaufbauseitig fest gelagerte Gehäuse sind der Drehfederstab, der äußerer Torsionsstab und das Festlager des Federelements ihrerseits mittelbar karosserieaufbauseitig fest gelagert.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:
- Fig. 1: eine schematische Schnittdarstellung der erfindungsgemäßen Drehfederanordnung;
- Fig. 2: einen Teilausschnitt einer Radaufhängung eines Kraftfahrzeugs mit einer als Drehfederstabanordnung gemäß Fig. 1 ausgebildeten Tragfeder;
- Fig. 3: eine Draufsicht auf die Radaufhängung nach Fig. 2;
- Fig. 4: eine Ansicht schräg von oben auf die Radaufhängung nach Fig. 2, und
- Fig. 5: eine Seitenansicht auf die Radaufhängung nach Fig. 2.

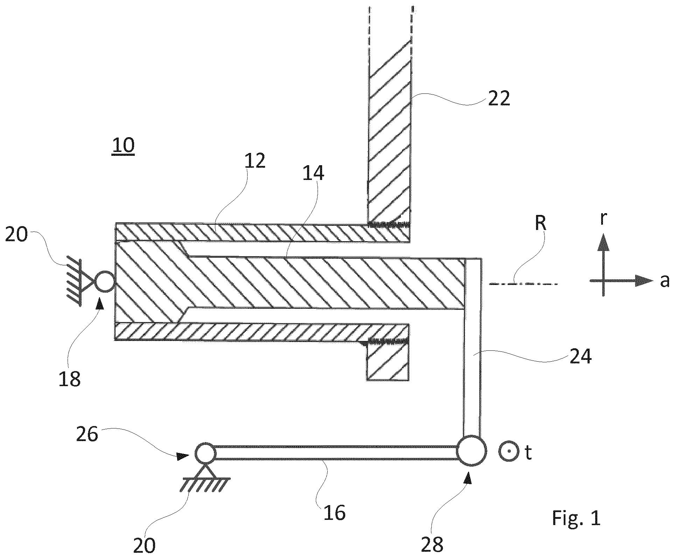

Fig. 1 zeigt in einer schematischen Schnittdarstellung eine insgesamt mit der Bezugsziffer 10 bezeichnete Drehfederanordnung für eine Radaufhängung eines Kraftfahrzeugs.

Die Drehfederanordnung 10 umfasst einen in radialer Richtung r betrachtet äußeren Torsionsstab 12, einen koaxial im Innern des äußeren Torsionsstabs 12 angeordneten inneren Torsionsstab 14 sowie ein in Form einer Blattfeder ausgebildetes, achsparallel mit Radialabstand zu den beiden Torsionsstäben 12, 14 angeordnetes Federelement 16. Dabei ist, wie Fig. 1 zeigt, der äußere Torsionsstab 12 über ein Lager 18 fest am Kraftfahrzeugaufbau 20 gelagert und mit einem an einem Radführungselement befestigbaren Abtriebshebel 22 drehfest verbunden.

Die in axialer Richtung a ausgerichtete, gemeinsame Achse der beiden Torsionsstäbe 12, 14 ist nachfolgend mit R bezeichnet.

Das Federelement 16 ist über eine Koppel 24 mit dem inneren Torsionsstab 14 verbunden und an seinem der Koppel 24 abgewandten Ende über ein Festlager 26 fest am Kraftfahrzeugaufbau 20 und ein Federelementlager 28 an der Koppel 24 gelagert. Der innere Torsionsstab 14 ist an seinem der Koppel 24 abgewandten Endbereich fest mit dem äußeren Torsionsstab 12 verbunden, so dass die Torsionsstäbe 12, 14 und das Federelement 16 in Bezug auf die Federwirkung eine Reihenschaltung bilden, d.h., dass das Federelement 16 in Bezug auf die Federwirkung in Reihe zu den beiden Torsionsstäben 12, 14 wirkt.

Das Federelementlager 28 ist dabei derart ausgebildet, dass eine aus einer Verdrehung des inneren Torsionsstabs 14 um die Achse R resultierenden rotatorischen Bewegung der Koppel 24 in eine am Federelement 16 angreifende, in tangentialer Richtung gerichtete translatorische Bewegung überführt wird. Die in Fig. 1 senkrecht zum Figurenblatt verlaufende translatorische Auslenkung des Federstabs 16 ist mit dem Bezugszeichen t gekennzeichnet. Aufgrund der reinen translatorischen Auslenkung des Federstabs 16 ist somit gewährleistet, dass das in Form einer Blattfeder ausgebildete Federelement 16 ausschließlich auf Biegung beansprucht wird.

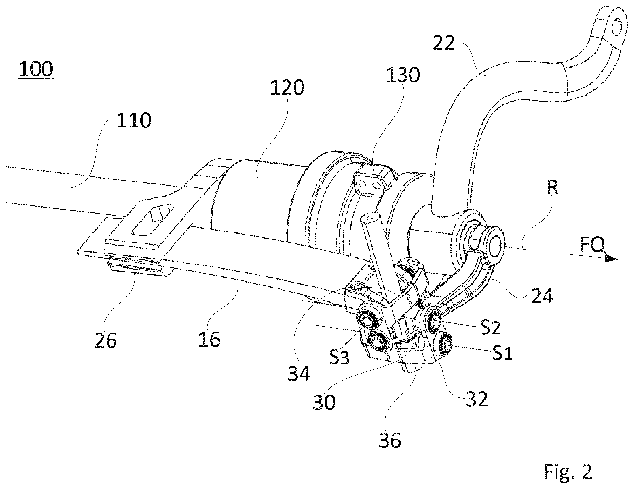

Fig. 2 zeigt einen Teilausschnitt einer insgesamt mit der Bezugsziffer 100 bezeichneten Radaufhängung, bei der die Tragfeder durch eine Drehfederanordnung 10 gebildet ist.

Die Radaufhängung 100 umfasst einen in Fahrzeugquerrichtung FQ ausgerichteten, in Form eines hohlzylindrischen Drehstabes 110 ausgebildeten Stabilisator, der - wie auch der äußere Torsionsstab 12 der Drehfederanordnung 10 - mit dem Abtriebshebel 22 drehfest verbunden ist. Der Abtriebshebel 22 ist in bekannter Art und Weise mit einem Radführungselement, z.B. einem Lenker, befestigbar.

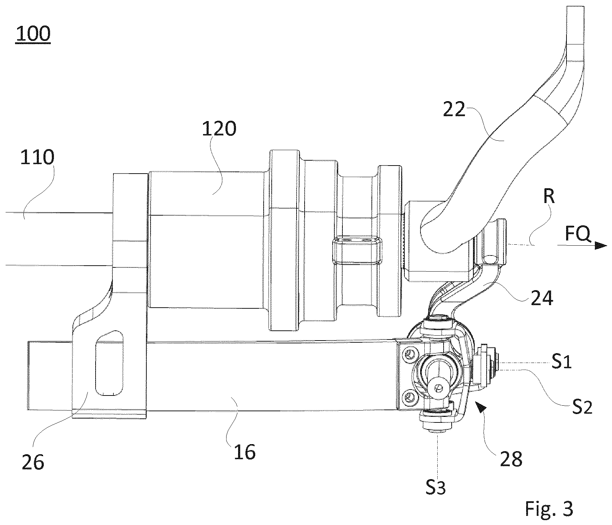

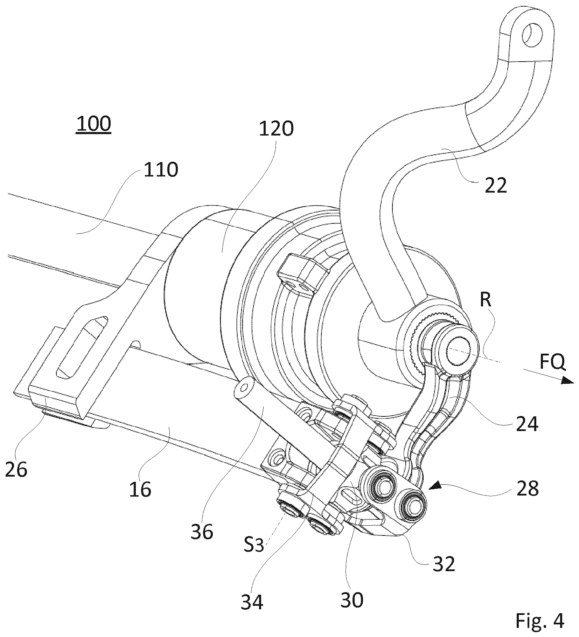

Wie Fig. 2 bis 4 weiter zeigen, ist dabei der Drehstab 110 des Stabilisators bereichsweise von einem Gehäuse 120 umhüllt. Das Gehäuse 120 ist über eine Lagerstelle 130 am Kraftfahrzeugaufbau fest lagerbar. Über ein im Gehäuse 120 angeordnetes Stabilisatorlager ist der Drehstab 110 karosserieseitig gelagert.

Von der Drehstabfederanordnung 10 sind vorliegend lediglich die Koppel 24, das Federelementlager 28, das in Form einer Blattfeder ausgebildete Federelement 16 sowie das Festlager 26 sichtbar; die beiden Torsionsstäbe 12, 14 der Drehstabfederanordnung 10, die koaxial im Innern des Drehstabs 110 des Stabilisators angeordnet sind, sind vorliegend durch das Gehäuse 120 verdeckt.

Wie Fig. 2 bis 4 zeigen, ist dabei das Festlager 26 in Form einer Einspannung realisiert, und am Gehäuse 120 und damit fest am Kraftfahrzeugaufbau gelagert. Zudem ist über das Gehäuse 120 das den äußeren Torsionsstab 12 lagernde - hier nicht sichtbare - Lager 18 am Kraftfahrzeugaufbau gelagert.

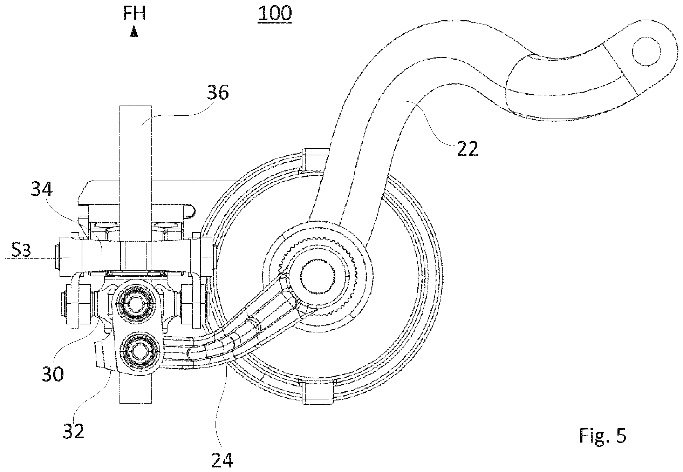

Wie insbesondere aus Fig. 2 und Fig. 5 ersichtlich, umfasst das Federelementlager 28 drei Lagerbauteile, nämlich ein Lagerelement 30, ein mit der Koppel 24 und dem Lagerelement 30 verbundenes erstes Lagerteil 32 sowie ein mit dem Federelement 16 und dem Lagerelement 30 verbundenes zweites Lagerteil 34, wobei das Lagerelement 30 über eine kraftfahrzeugaufbauseitig fest gelagerte, in Kraftfahrzeughochrichtung FH ausgerichtete Führung 36 in Kraftfahrzeughochrichtung FH translatorisch geführt ist.

Zur Überführung der um die Achse R gerichtete Rotationsbewegung der Koppel 24 in eine in tangentialer Richtung t, d.h. vorliegend in eine in Fahrzeughochrichtung FH ausgerichtete, translatorische Bewegung des zweiten Lagerteils 34 und damit des im Lager 28 gelagerten Ende des Federelements 16, ist die Koppel 24 über eine schwenkbewegliche Lagerung am Lagerelement 30 gelagert. Hierzu ist die Koppel 24 um eine parallel zu den beiden Torsionsstäben 12, 14 und damit parallel zur Achse R angeordneten ersten Schwenkachse S₁ schwenkbar am ersten Lagerteil 32 gelagert und das erste Lagerelement 32 ist um eine parallel zur ersten Lagerachse S₁ ausgerichteten zweiten Lagerachse S₂ schwenkbar am Lagerelement 30 angeordnet.

Zur Vermeidung von Verspannungen ist zudem das Federelement 16 um eine senkrecht zu den beiden Torsionsstäben 12, 14 und senkrecht zur tangentialen Richtung t, d.h. senkrecht zur Fahrzeughochrichtung FQ, ausgerichtete dritte Schwenkachse S₃ am zweiten Lagerelement 34 gelagert.

## Patentansprüche

1. Drehfederanordnung (10) für eine Radaufhängung (100) eines Kraftfahrzeugs, umfassend zwei koaxial ineinander angeordnete Torsionsstäbe (12, 14) sowie ein mit Radialabstand zu den beiden koaxialen Torsionsstäben (12, 14) angeordnetes, in axialer Richtung (a) der Torsionsstäbe (12, 14) ausgerichtetes, über eine Lagerstelle (26) am Kraftfahrzeugaufbau lagerbares Federelement (16), wobei der in radialer Richtung (r) betrachtet äußere hohlzylindrische Torsionsstab (12) kraftfahrzeugaufbauseitig lagerbar ist und mit einem an einem Radführungselement befestigbaren Abtriebshebel (22) drehfest verbunden ist und der in radialer Richtung (r) betrachtet innere Torsionsstab (14) drehfest mit dem äußeren Torsionsstab (12) und über eine Koppel (24) drehfest mit dem Federelement (16) verbunden ist,
**dadurch gekennzeichnet, dass**
das Federelement (16) über ein Federelementlager (28) an der Koppel (24) gelagert ist, welches derart ausgebildet ist, dass das Federelement (16) ausschließlich mit einer mit einer in tangentialer Richtung (t) gerichteten, translatorischen Auslenkung beaufschlagt wird und dass die das Federelement (16) kraftfahrzeugaufbauseitig lagernde Lagerstelle (26) als ein Festlager ausgebildet ist.

2. Drehfederanordnung nach Anspruch 1,
**dadurch gekennzeichnet, dass**
das Federelement (16) in Form einer Blattfeder ausgebildet ist.

3. Drehfederanordnung nach Anspruch 2,
**dadurch gekennzeichnet, dass**
die Blattfeder (16) aus einem metallischen Werkstoff oder einem Faserverbundwerkstoff ausgebildet ist.

4. Drehfederanordnung nach einem der vorgenannten Ansprüche,
**dadurch gekennzeichnet, dass**
das Federelementlager (28) ein auslenkbares, über eine Führung (36) translatorisch geführtes Lagerelement (30), ein mit der Koppel (24) und mit dem Lagerelement (30) verbundenes erstes Lagerteil (32), und ein mit dem Federelement (16) und dem Lagerelement (30) verbundenes zweites Lagerteil (34), sowie Mittel, die die rotatorische Koppelbewegung in eine translatorische Bewegung des Lagerelements (30) und damit des zweiten Lagerteils (34) überführt, umfasst.

5. Drehfederanordnung nach Anspruch 4,
**dadurch gekennzeichnet, dass**
die Mittel zur Überführung der rotatorischen Koppelbewegung in eine translatorische Bewegung in Form einer schwenkbeweglichen Lagerung der Koppel (24) an dem Lagerelement (30) ausgebildet sind.

6. Drehfederanordnung nach Anspruch 5,
**dadurch gekennzeichnet, dass**
zur schwenkbeweglichen Lagerung der Koppel (24) an dem Lagerelement (30) die Koppel (24) um eine parallel zu den Torsionsstäben (12, 14) ausgerichteten ersten Schwenkachse (S₁) schwenkbar am ersten Lagerteil (30) und dass das erste Lagerteil (32) um eine parallel zur ersten Schwenkachse (S₁) liegenden zweiten Schwenkachse (S₂) schwenkbar am Lagerelement (30) gelagert ist.

7. Drehfederanordnung nach Anspruch 4,
**dadurch gekennzeichnet, dass**
die Mittel zur Überführung der rotatorischen Koppelbewegung in eine translatorische Bewegung in Form eines zwischen der Führung (30) und dem ersten und/oder dem zweiten Lagerteil (32, 34) angeordneten Gummi-Metall-Lagers ausgebildet sind.

8. Drehfederanordnung nach Anspruch 6 oder 7,
**dadurch gekennzeichnet, dass**
das Federelement um eine senkrecht zu den Torsionsstäben (12, 14) ausgerichteten und senkrecht zur Führung (36) ausgerichteten dritten Schwenkachse (S₃) schwenkbar am zweiten Lagerteil (34) gelagert ist.

9. Radaufhängung (100) für ein Rad einer Achse eines Kraftfahrzeugs, umfassend eine zwischen dem Kraftfahrzeugaufbau und einem Radführungselement wirksame Tragfeder,
**dadurch gekennzeichnet, dass**
die Tragfeder in Form einer Drehfederanordnung (10) nach einem der Ansprüche 1 bis 8 ausgebildet ist.

10. Radaufhängung nach Anspruch 9, wobei die Radaufhängung ferner einen in Fahrzeugquerrichtung ausgerichteten, in Form eines hohlzylindrischen Drehfederstabs (110) ausgebildeten Stabilisator umfasst,
**dadurch gekennzeichnet, dass**
die Drehfederanordnung (10) bereichsweise koaxial im Innern des hohlzylindrischen Drehfederstabs (110) angeordnet ist.

11. Radaufhängung nach Anspruch 10,
**dadurch gekennzeichnet, dass**
im Bereich der koaxialen verschachtelten Anordnung der Bauteile Drehfederstab (110) und Drehfederanordnung (10) die Bauteile Drehfederstab (110) und Drehfederanordnung (10) von einem kraftfahrzeugaufbauseitig fest gelagerten Gehäuse (120) umschlossen sind, wobei der Drehfederstab (110) des Stabilisators am Gehäuse (120) und damit kraftfahrzeugaufbauseitig gelagert ist und wobei der hohlzylindrische Torsionsstab (12) der Drehfederanordnung (10) am Gehäuse (120) und das dem Federelement (16) zugeordnete Festlager (26) am Gehäuse (120) und damit kraftfahrzeugaufbauseitig fest gelagert sind.

## Claims

1. Torsion spring arrangement (10) for a wheel suspension (100) of a motor vehicle, comprising two torsion bars (12, 14), which are arranged coaxially one inside the other, and comprising a spring element (16), which is arranged at a radial distance from the two coaxial torsion bars (12, 14), aligned in the axial direction (a) of the torsion bars (12, 14), which can be mounted on the motor vehicle body by means of a bearing point (26), wherein the radially (r) outer hollow cylindrical torsion bar (12) can be mounted on the motor vehicle body and is connected rotationally fixedly to an output lever (22), which can be attached to a wheel guidance element, and the radially (r) inner torsion bar (14) is connected rotationally fixedly to the outer torsion bar (12) and, by means of a coupling (24), rotationally fixedly to the spring element (16),
**characterised in that**
the spring element (16) is mounted on the coupling (24) by means of a spring element bearing (28), which is designed such that the spring element (16) is acting exclusively with a tangentially (t) directed translational deflection and that the bearing point (26) mounted on the motor vehicle body for the spring element (16) is designed as a fixed bearing.

2. Torsion spring arrangement according to claim 1,
**characterised in that**
the spring element (16) is designed in the form of a leaf spring.

3. Torsion spring arrangement according to claim 2,
**characterised in that**
the leaf spring (16) is formed from a metallic material or a fibre composite material.

4. Torsion spring arrangement according to any of the aforementioned claims,
**characterised in that**
the spring element bearing (28) comprises a deflectable bearing element (30), which can be translationally controlled by means of a guide (36), a first bearing element (32) connected to the coupling (24) and to the bearing element (30) and a second bearing element (34) connected to the spring element (16) and the bearing element (30), as well as means, which convert the rotational coupling movement into a translational movement of the bearing element (30) and thus the second bearing element (34).

5. Torsion spring arrangement according to claim 4,
**characterised in that**
the means for converting the rotational coupling movement into a translational movement are designed in the form of a pivotable bearing of the coupling (24) on the bearing element (30).

6. Torsion spring arrangement according to claim 5,
**characterised in that**
for pivotable bearing of the coupling (24) on the bearing element (30), the coupling (24) is mounted pivotably around a first pivot axis (S₁) aligned parallel to the torsion bars (12, 14) on the first bearing element (30) and that the first bearing element (32) is mounted pivotably around a second pivot axis (S₂) lying parallel to the first pivot axis (S₁) on the bearing element (30).

7. Torsion spring arrangement according to claim 4,
**characterised in that**
the means for converting the rotational coupling movement into a translational movement is designed in the form of a rubber-metal bearing arranged between the guide (30) and the first and/or the second bearing element (32, 34).

8. Torsion spring arrangement according to claim 6 or 7,
**characterised in that**
the spring element is pivotably mounted around a third pivot axis (S₃) aligned perpendicular to the torsion bars (12, 14) and perpendicular to the guide (36) on the second bearing element (34).

9. Wheel suspension (100) for a wheel of an axis of a motor vehicle, comprising a suspension spring acting between the motor vehicle body and a wheel guidance element,
**characterised in that**
the suspension spring is designed in the form of a torsion spring arrangement (10) according to any of the claims 1 to 8.

10. Wheel suspension according to claim 9, wherein the wheel suspension also comprises a stabiliser aligned in the vehicle transverse direction, designed in the form of a hollow cylindrical torsion spring rod (110),
**characterised in that**
the torsion spring arrangement (10) is arranged coaxially in certain places inside the hollow cylindrical torsion spring rod (110).

11. Wheel suspension according to claim 10,
**characterised in that**
in the region of the coaxially interleaved arrangement of the torsion spring rod (110) and torsion spring arrangement (10) components, the torsion spring rod (110) and torsion spring arrangement (10) components are enclosed by a housing (120) firmly mounted on the motor vehicle body, wherein the torsion spring rod (110) of the stabiliser is mounted on the housing (120) and thus on the motor vehicle body and wherein the hollow cylindrical torsion bar (12) of the torsion spring arrangement (10) is firmly mounted on the housing (120) and the fixed bearing (26) assigned to the spring element (16) is firmly mounted on the housing (120) and thus on the motor vehicle body.

## Revendications

1. Ensemble formant ressort de torsion (10) pour une suspension de roue (100) d'un véhicule à moteur, comprenant deux barres de torsion (12, 14) agencées de manière coaxiale l'une dans l'autre et un élément formant ressort (16) agencé à une distance radiale des deux barres de torsion (12, 14) coaxiales, orienté dans la direction axiale (a) des barres de torsion (12, 14) et pouvant être monté sur la carrosserie de véhicule à moteur par l'intermédiaire d'un point d'appui (26), dans lequel la barre de torsion (12) cylindrique creuse, extérieure lorsqu'elle est considérée dans la direction radiale (r), peut être montée du côté carrosserie de véhicule à moteur et est reliée de manière solidaire en rotation à un levier de sortie (22) pouvant être fixé à un élément de guidage de roue, et la barre de torsion (14), intérieure lorsqu'elle est considérée dans la direction radiale (r), peut être reliée de manière solidaire en rotation à la barre de torsion (12) extérieure et est reliée de manière solidaire en rotation à l'élément formant ressort (16) par l'intermédiaire d'une bielle (24),
**caractérisé en ce que**,
l'élément formant ressort (16) est monté au niveau de la bielle (24) par l'intermédiaire d'un palier d'élément formant ressort (28) qui est réalisé de telle manière que l'élément formant ressort (16) est sollicité exclusivement par un renvoi de translation orienté dans la direction tangentielle (t), et **en ce que** le point d'appui (26) supportant l'élément formant ressort (16) côté carrosserie de véhicule à moteur est réalisé sous la forme d'un palier fixe.

2. Ensemble formant ressort de torsion selon la revendication 1,
**caractérisé en ce que**
l'élément formant ressort (16) est réalisé sous la forme d'un ressort à lame.

3. Ensemble formant ressort de torsion selon la revendication 2,
**caractérisé en ce que**
le ressort à lame (16) est réalisé à partir d'un matériau métallique ou d'un matériau composite à base de fibres.

4. Ensemble formant ressort de torsion selon l'une quelconque des revendications précédentes,
**caractérisé en ce que**,
le palier d'élément formant ressort (28) comprend un élément de palier (30) pouvant être dévié et guidé en translation par l'intermédiaire d'un guide (36), une première partie de palier (32) reliée à la bielle (24) et à l'élément de palier (30), et une seconde partie de palier (34) reliée à l'élément formant ressort (16) et à l'élément de palier (30), ainsi que des moyens qui convertissent le mouvement rotatif de bielle en un mouvement de translation de l'élément de palier (30) et donc de la seconde partie de palier (34).

5. Ensemble formant ressort de torsion selon la revendication 4,
**caractérisé en ce que**
les moyens permettant de convertir le mouvement rotatif de bielle en un mouvement de translation sont réalisés sous la forme d'un montage pivotant de la bielle (24) au niveau de l'élément de palier (30).

6. Ensemble formant ressort de torsion selon la revendication 5,
**caractérisé en ce que**
pour le montage pivotant de la bielle (24) au niveau de l'élément de palier (30), la bielle (24) est montée au niveau de la première partie de palier (30) de manière à pouvoir pivoter autour d'un premier axe de pivotement (S₁) orienté parallèlement aux barres de torsion (12, 14), et **en ce que** la première partie de palier (32) est montée au niveau de l'élément de palier (30) de manière à pouvoir pivoter autour d'un second axe de pivotement (S₂) orienté parallèlement au premier axe de pivotement (S₁).

7. Ensemble formant ressort de torsion selon la revendication 4,
**caractérisé en ce que**
les moyens permettant de convertir le mouvement rotatif de bielle en un mouvement de translation sont réalisés sous la forme d'un palier caoutchouc-métal agencé entre le guide (30) et la première et/ou la seconde partie de palier (32, 34).

8. Ensemble formant ressort de torsion selon la revendication 6 ou 7,
**caractérisé en ce que**
l'élément formant ressort est monté au niveau de la seconde partie de palier (34) de manière à pouvoir pivoter autour d'un troisième axe de pivotement (S₃) orienté perpendiculairement aux barres de torsion (12, 14) et orienté perpendiculairement au guide (36).

9. Suspension de roue (100) pour une roue d'un essieu d'un véhicule à moteur, comprenant un ressort d'appui agissant entre la carrosserie de véhicule à moteur et un élément de guidage de roue,
**caractérisée en ce que**
le ressort d'appui est réalisé sous la forme d'un ensemble formant ressort de torsion (10) selon l'une quelconque des revendications 1 à 8.

10. Suspension de roue selon la revendication 9, dans laquelle la suspension de roue comprend en outre un stabilisateur orienté dans la direction transversale de véhicule et réalisé sous la forme d'une tige de ressort de torsion (110) cylindrique creuse,
**caractérisée en ce que**
par endroits, l'agencement formant ressort de torsion (10) est agencé de manière coaxiale à l'intérieur de la tige de ressort de torsion (110) cylindrique creuse.

11. Suspension de roue selon la revendication 10,
**caractérisée en ce que**
dans la région de l'agencement coaxialement entrelacé des composants tige de ressort de torsion (110) et ensemble formant ressort de torsion (10), les composants tige de ressort de torsion (110) et ensemble formant ressort de torsion (10) sont entourés par un boîtier (120) monté fixe du côté carrosserie de véhicule à moteur, dans laquelle la tige de ressort de torsion (110) du stabilisateur est montée au niveau du boîtier (120) et donc du côté carrosserie de véhicule à moteur, et dans laquelle la tige de torsion (12) cylindrique creuse de l'ensemble formant ressort de torsion (10) est montée fixe au niveau du boîtier (120) et le palier fixe (26) associé à l'élément formant ressort (16) est monté fixe au niveau du boîtier (120) et donc du côté carrosserie de véhicule à moteur.
